# EUROPEAN PATENT APPLICATION

(11) **EP 3 299 930 A1**
(43) Date of publication of application: **28.03.2018**
(21) Application number: 16306210.2
(22) Date of filing: 21.09.2016
(51) Int. Cl.: G06F 3/01

(54) **VIRTUAL REALITY INTERACTION**

(71) Applicant: ALCATEL LUCENT, 92100 Boulogne-Billancourt (FR)
(72) Inventor: MATHUR, Akhil, Dublin, 15 (IE)
(74) Representative: Leppard, Andrew John

(57) **Abstract**

A method of virtual reality interaction, a computer program product and a virtual reality apparatus are disclosed. The method of virtual reality interaction comprises: determining user interactions supported by at least one smart device; configuring gesture logic to generate a virtual reality interaction signal in response to a corresponding activation signal generatable by the at least one smart device during a corresponding user interaction supported by the at least one smart device; and generating the virtual reality interaction signal in response to the corresponding activation signal received from the at least one smart device during the corresponding user interaction. In this way, a distributed interaction mechanism is provided which uses on-device sensors on handheld devices owned by the users (e.g. smartphones or wearables) to interact (e.g. navigate) with the VR content. This converts a group of handheld/wearable devices with inertial or other sensors into a convenient "remote control" for interacting with virtual reality applications. Accordingly, users can employ existing devices they already have with them (e.g. smartphones, wearables) as an interaction modality with the VR content, rather than carrying a separate joystick or having to make non-intuitive gestures.

## Description

### FIELD OF THE INVENTION

The present invention relates to a method of virtual reality interaction, a computer program product and a virtual reality apparatus.

### BACKGROUND

Virtual Reality (VR) systems and applications are known and are gradually coming into the mainstream, primarily due to the development of better content creation systems (e.g. Nokia Ozo) and affordable content visualization systems (e.g. Google Cardboard) which can turn any smartphone into a head-mounted VR display. VR content is typically streamed to the VR system. Although different techniques exist to allow user-interaction with the VR content, such as navigating within that VR content, these techniques have shortcomings. Accordingly, it is desired to provide improved techniques for interacting with VR content.

### SUMMARY

According to a first aspect, there is provided a method of virtual reality interaction, comprising: determining user interactions supported by at least one smart device; configuring gesture logic to generate a virtual reality interaction signal in response to a corresponding activation signal generatable by the at least one smart device during a corresponding user interaction supported by the at least one smart device; and generating the virtual reality interaction signal in response to the corresponding activation signal received from the at least one smart device during the corresponding user interaction.

The first aspect recognises that one of the primary challenges with current VR systems is the poor interaction capabilities between the user and the VR content. In headsets such as the Google Cardboard, the smartphone is inside a box and as such, interacting with it becomes problematic. Even for more expensive headsets such as the Oculus Rift, which use head tracking, user interaction requires the user to make non-intuitive head gestures - for example, in a car racing game, users may need to repeatedly tilt their head to turn the car's driving direction. This is likely to lead to simulation sickness and poor user experience.

When interacting with VR content, the ability to perform seamless locomotion and navigation is key for a good user experience. For example, a Nokia Ozo camera was recently used for capturing 360 degree videos at Euro 2016 football tournament. In order to experience this video, users need a convenient way to navigate and move around in the 360 degree environment without the need of excessive, non-intuitive head gestures. However, the limited input capabilities of the VR headsets are a major bottleneck in achieving this aim.

Another approach requires users to buy and carry a joystick or a gamepad with them. The joystick has several hardware controls, each tuned for specific navigation action. The limitation of this solution is that users must have access to the joystick every time they want to interact with VR content - and in future, as VR apps become more mainstream in everyday life, it will be unreasonable to expect users to carry a joystick with them all the time. Consider the use case for a future VR experience in a sports arena, where spectators can view the 360 degree sports action over VR.

The first aspect recognises that it would be much more practical if users did not have to make non-intuitive gestures or need to carry a joystick or some other dedicated device with them to interact with the VR content.

Accordingly, a method is provided. The method may be for virtual reality interaction or interaction with a virtual reality apparatus. The method may comprise the step of determining or establishing those user interactions which are supported by one or more smart devices such as a communication device or other general-purpose user equipment. The method may also comprise configuring gesture logic to generate a virtual reality interaction signal. The gesture logic may be configured to generate the virtual reality interaction signal in response to, or as a result of, receiving a corresponding or associated activation signal which may be generated by the smart device. The activation signal may be generated by the smart device during a corresponding or associated user interaction which is supported by the smart device. The method may also comprise generating the virtual reality interaction signal in response or on receipt of the corresponding or associated activation signal when received from the smart device during the corresponding or associated user interaction. In this way, a distributed interaction mechanism is provided which uses on-device sensors on handheld devices owned by the users (e.g. smartphones or wearables) to interact (e.g. navigate) with the VR content. This converts a group of handheld/wearable devices with inertial or other sensors into a convenient "remote control" for interacting with virtual reality applications. Accordingly, users can employ existing devices they already have with them (e.g. smartphones, wearables) as an interaction modality with the VR content, rather than carrying a separate joystick or having to make non-intuitive gestures.

In one embodiment, the determining comprises determining user interactions supported by a plurality of smart devices. Accordingly, the one or more user interactions supported by each of more than one smart device may be determined.

In one embodiment, the step of determining comprises broadcasting a list of user interactions required to be supported by the smart devices.

In one embodiment, the step of determining comprises receiving an indication of which of that list of user interactions are supported by each smart device.

In one embodiment, the configuring comprises configuring the gesture logic to generate a virtual reality interaction signal in response to a plurality of corresponding activation signals generatable by the plurality of smart devices during a corresponding user interaction supported by each smart device. Accordingly, the gesture logic maybe configured to generate a virtual reality interaction signal in response to more than one activation signal generated by more than one smart device during user interactions.

In one embodiment, the generating comprises generating the virtual reality interaction signal in response to the plurality of corresponding activation signals received from the plurality of smart devices during the corresponding user interaction supported by each smart device. Accordingly, the separate user interactions with each of the smart devices may jointly lead to the generation of a virtual reality interaction signal.

In one embodiment, the activation signal comprises a unique identifier for that smart device.

In one embodiment, the activation signal comprises an interaction identifier identifying the user interaction.

In one embodiment, the activation signal comprises a magnitude of the user interaction.

In one embodiment, the activation signal comprises a timestamp.

In one embodiment, the generating comprises receiving activation signals received from the plurality of smart devices, synchronising the activation signals using the timestamp and generating the virtual reality interaction signal in response to the synchronised activation signals. Accordingly, the activations signals maybe synchronized or aligned using the time stamp and the virtual reality interaction signals maybe generated in response to time-aligned activation signals.

In one embodiment, the determining comprises determining whether each smart device is available for user interaction. Accordingly, an assessment is made of whether particular smart devices are available to be used for user interaction. Some devices may be configured not to be available.

In one embodiment, the determining comprises determining at least one of a location and orientation of each smart device. Accordingly, the location and/or orientation of each smart device may be determined.

In one embodiment, the determining comprises determining at least one of a relative location and relative orientation of each smart device with respect to each other. Accordingly, the relative location and/or orientation of each smart device with respect to each other and/or the user may be determined.

In one embodiment, the determining comprises receiving from each smart device a unique identifier for the smart device;
In one embodiment, the determining comprises receiving from each smart device an indication of a type of the smart device from which the user interactions supported by the smart device is derivable.

In one embodiment, the determining comprises receiving from each smart device a list of user interactions supported by the smart device.

In one embodiment, a user interaction supported by at least one smart device comprises step detection and a user interaction supported by at least another smart device comprises tilt detection, the configuring comprises configuring the gesture logic to generate a walk signal as the virtual reality interaction signal in response to an activation signal generatable by the at least one smart device during stepping by the user and an activation signal generatable by the at least another smart device when tilted by the user and the generating comprises generating the walk signal in response to the activation signal received from the at least one smart device during stepping by the user and the activation signal received from the at least another smart device when tilted by the user. Accordingly, two smart devices may be utilized together to generate a "walk" signal to control walking within the virtual reality environment. One of the smart devices may generate an activation signal during stepping, and the other smart device may generate an activation signal when tilted by the user. The combined tilting and walking together causes the "walk" signal to be generated in response.

In one embodiment, a user interaction supported by at least one smart device and at least another smart device comprises motion detection, the configuring comprises configuring the gesture logic to generate a zoom out signal as the virtual reality interaction signal in response to activation signals generatable by the at least one smart device and at least another smart device during movement of the at least one smart device away from the at least another smart device and the generating comprises generating the zoom out signal in response to activation signals received from the at least one smart device and at least another smart device during movement of the at least one smart device away from the at least another smart device. Accordingly, two smart devices may be utilized together to generate a "zoom-out" signal to control walking within the virtual reality environment. The devices may be moved away from each other to generate the "zoom-out" signal as the virtual reality interaction signal.

In one embodiment, a user interaction supported by at least one smart device and at least another smart device comprises motion detection, the configuring comprises configuring the gesture logic to generate a zoom in signal as the virtual reality interaction signal in response to activation signals generatable by the at least one smart device and at least another smart device during movement of the at least one smart device towards the at least another smart device and the generating comprises generating the zoom in signal in response to activation signals received from the at least one smart device and at least another smart device during movement of the at least one smart device towards the at least another smart device. Accordingly, two smart devices may be utilized together to generate a "zoom-in" signal to control walking within the virtual reality environment. The devices may be moved towards each other to generate the "zoom-in" signal as the virtual reality interaction signal.

In one embodiment, the method comprises receiving an indication of a virtual reality application to which the virtual reality interaction signals are to be provided. According to a second aspect, there is provided a computer program product operable, when executed on a computer, to perform the method of the first aspect.

According to a third aspect, there is provided a virtual reality apparatus, comprising: determining logic operable to determine user interactions supported by at least one smart device; configuration logic operable to configure generating logic to generate a virtual reality interaction signal in response to a corresponding activation signal generated by the at least one smart device during a corresponding user interaction supported by the at least one smart device; and generating logic operable to generate the virtual reality interaction signal in response to the corresponding activation signal received from the at least one smart device during the corresponding user interaction.

In one embodiment, the determining logic is operable to determine user interactions supported by a plurality of smart devices.

In one embodiment, the configuration logic is operable to configure the generating logic to generate a virtual reality interaction signal in response to a plurality of corresponding activation signals generated by the plurality of smart devices during a corresponding user interaction supported by each smart device.

In one embodiment, the configuration logic is operable to configure the generating logic to generate the virtual reality interaction signal in response to the plurality of corresponding activation signals received from the plurality of smart devices during the corresponding user interaction supported by each smart device.

In one embodiment, each activation signal comprises a unique identifier for that smart device.

In one embodiment, each activation signal comprises an interaction identifier identifying the user interaction.

In one embodiment, each activation signal comprises a magnitude of the user interaction.

In one embodiment, each activation signal comprises a timestamp.

In one embodiment, the generating logic is operable to receive activation signals received from the plurality of smart devices, synchronise the activation signals using the timestamp and generate the virtual reality interaction signal in response to the synchronised activation signals.

In one embodiment, the determining logic is operable to determine whether each smart device is available for user interaction.

In one embodiment, the determining logic is operable to determine at least one of a location and orientation of each smart device.

In one embodiment, the determining logic is operable to determine at least one of a relative location and relative orientation of each smart device with respect to each other.

In one embodiment, the determining logic is operable to receive from each smart device a unique identifier for the smart device.

In one embodiment, the determining logic is operable to receive from each smart device an indication of a type of the smart device from which the user interactions supported by the smart device is derivable.

In one embodiment, the determining logic is operable to receive from each smart device a list of user interactions supported by the smart device.

In one embodiment, a user interaction supported by at least one smart device comprises step detection and a user interaction supported by at least another smart device comprises tilt detection, and wherein the configuration logic is operable to configure the generating logic to generate a walk signal as the virtual reality interaction signal in response to an activation signal generated by the at least one smart device during stepping by the user and an activation signal generated by the at least another smart device when tilted by the user and the generating logic is operable to generate the walk signal in response to the activation signal received from the at least one smart device during stepping by the user and the activation signal received from the at least another smart device when tilted by the user.

In one embodiment, a user interaction supported by at least one smart device and at least another smart device comprises motion detection, the configuration logic is operable to configure the generating logic to generate a zoom out signal as the virtual reality interaction signal in response to activation signals generated by the at least one smart device and at least another smart device during movement of the at least one smart device away from the at least another smart device and the generating logic is operable to generate the zoom out signal in response to activation signals received from the at least one smart device and at least another smart device during movement of the at least one smart device away from the at least another smart device.

In one embodiment, a user interaction supported by at least one smart device and at least another smart device comprises motion detection, the configuration logic is operable to configure the generating logic to generate a zoom in signal as the virtual reality interaction signal in response to activation signals generated by the at least one smart device and at least another smart device during movement of the at least one smart device towards the at least another smart device and the generating logic is operable to generate the zoom in signal in response to activation signals received from the at least one smart device and at least another smart device during movement of the at least one smart device towards the at least another smart device.

In one embodiment, the virtual reality apparatus comprises reception logic operable to receive an indication of a virtual reality application to which the virtual reality interaction signals are to be provided.

Further particular and preferred aspects are set out in the accompanying independent and dependent claims. Features of the dependent claims may be combined with features of the independent claims as appropriate, and in combinations other than those explicitly set out in the claims.

Where an apparatus feature is described as being operable to provide a function, it will be appreciated that this includes an apparatus feature which provides that function or which is adapted or configured to provide that function.

### BRIEF DESCRIPTION OF THE DRAWINGS

Embodiments of the present invention will now be described further, with reference to the accompanying drawings, in which:

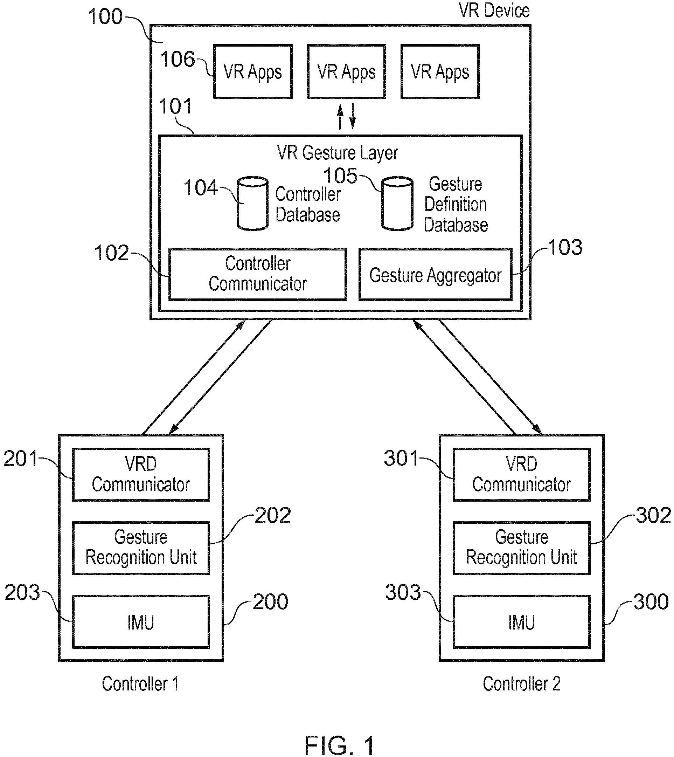

Figure 1 illustrates components of a VR device and interacting user devices according to one embodiment.

### DESCRIPTION OF THE EMBODIMENTS

Before discussing the embodiments in any more detail, first an overview will be provided. Embodiments provide an apparatus which enables existing general-purpose smart devices or user equipment to be used as controllers for a virtual reality apparatus. In other words, devices other than dedicated controllers maybe repurposed or configured to act as controllers. The apparatus acts as a user input interface between the smart devices and the virtual reality apparatus. In particular, the arrangement identifies the presence of a user's smart devices, as well as their user interaction capabilities such as any motion-sensing capabilities or input capabilities. The apparatus maybe configured to identify user interactions with those smart devices from activation signals received from those smart devices and translates those into virtual reality interaction signals to be provided to the virtual reality device to control the virtual reality environment. This enables a wide range of gestures or interactions to be defined which cause a similarly wide range of virtual reality interaction signals to be generated in order to interact with the virtual reality environment. Also, re-using the capabilities of the user's existing smart devices provides for a convenient way to interact with the virtual reality environment without the need for dedicated controllers.

Embodiments employ on-device sensors provided by surrounding, user-provided or user-accompanying multi-function interactive devices (e.g. smartphones or wearables) that the user might be carrying with them or wearing on their body (for example, wrist, hand, head, arms, leg, feet) and combine the outputs of these distributed sensors to generate a "VR-gesture", which then becomes an input to the VR content.

### General Approach

Before we describe the components of embodiments, the following may assist in understanding how an example arrangement may operate. Consider that a user is playing a car racing game on a VR headset. With a conventional VR headset, the user needs to perform uncomfortable head gestures (e.g. tilting their head left/right) to turn the car.

In embodiments, smart devices such as motion or gesture sensitive, or manually-actuatable user devices which are not dedicated VR controllers are utilised. For example, the VR user may wear a smartwatch on their left wrist and has a smartphone in their right hand - and both devices ('controllers') have an accelerometer sensor and other user-input sensors. To simulate a LEFT TURN gesture, the user makes simultaneous upward movement on the smartphone (right hand) and downward movement on the smartwatch (left hand) - just like they will do on a steering wheel. The accelerometers on the respective controllers detect this motion, generate motion information and pass the motion information to the VR headset or VR content engine - where the outputs of all individual 'controllers' are combined to generate a 'VR gesture' which in this case is the 'left turn' gesture. Other movements of the controllers can be used generate other VR gestures. These VR gestures are then used to control user interaction with the VR environment.

It will be appreciated that the individual controllers on their own may not necessarily recognize complex gestures, however, the motion information generated can still enable the user to achieve complex navigation gestures in the VR world using simple hand/body gestures on individual controllers.

### General Architecture & Operation

Figure 1 illustrates components of a VR device and interacting user devices according to one embodiment. Any user device 200; 300 which has an inertial measurement unit 203; 303 (i.e. accelerometers, gyroscope, magnetometer sensors) and is capable of capturing motion in a 3-dimensional space can be used as the 'controller' for the VR device 100. The user devices 200; 300 may have other input sensors (not shown) capable to detecting user input (for example, touch screen, keypad, buttons, pressure device, camera and the like).

### Controller Discovery

A VR gesture layer 101 is a system service running on the VR device 100 which coordinates with surrounding 'controllers' to combine their individual gesture outputs into a single VR gesture. To achieve this, the VR gesture layer 101, through a controller communicator module 102, first looks for any valid 'controllers' in the range of the VR device 100. This controller discovery can be initiated using any standard wireless protocols such as WiFi Direct or Bluetooth or even over wired connections such as USB or HDMI.

The connection request from the VR device 100 is received by the VR device communicator module 201; 301 on the user devices 200; 300. The VR device communicator module 201; 301 verifies that the user device 200; 300 is available for use (e.g., it is not occupied with another VR device, or the user is not on a call or performing some other task), and sends a confirmation message to the VR device 100. The confirmation message includes:
a) Device identifier (ID): a unique ID for the user device 200; 300;
b) Device availability: Is the user device 200; 300 available for VR gestures or not?
c) List of gestures that the user device 200; 300 is capable of recognizing: For example, up, down, left, right, flip, circular;
d) Device type: This conveys the type and relative location of the user device 200; 300 with the VR headset - for example, whether a smartwatch is in the right hand or left hand. This information can be computed automatically using existing techniques or by asking the user explicitly.

The VR gesture layer 101 stores all the user device 200; 300 attributes in a controller database 104.

When a VR app 106 is launched on the VR device 100, it first registers itself with the VR gesture layer 101 to receive gesture events. At this point, the VR gesture layer 101 prompts the associated user devices 200; 300 to send their individual gesture outputs.

The user devices 200; 300 use the sensor data streams originating from inertial measurement sensors 203; 303 or other sensors and pass them to a dedicated local gesture recognition unit 202; 302 to detect user gestures. For this purpose, any existing gesture recognition algorithms can be employed. Finally, the gesture outputs are sent periodically (for example, every k milliseconds) to the VR device 100 in the format: {device id, gesture id, gesture magnitude, timestamp}.

The gesture aggregator 103 on the VR device 100 runs every 'm' milliseconds and combines the unprocessed gesture outputs received from individual user devices 200; 300 into a navigational or other VR gesture, using pre-defined gesture definitions stored in a gesture definition database 105. The gesture definition database 105 contains definitions of various navigational or other VR gestures and how they can be computed using simpler motion gestures. Typically, the gesture definition database 105 associates the motions of or interactions with the user devices 200; 300 represented by the gesture outputs with particular VR gesture to control user interaction with the VR environment. For example, the 'left turn' navigational gesture could be defined as [{Device Type: Right Hand Device, Gesture: Up} and {Device Type: Left Hand Device, Gesture: Down}].

Finally, after processing the individual gestures and computing a navigational or other VR gesture from the gesture definitions database 105, the gesture aggregator 103 passes the VR gesture onto the VR app 106 using an event-based communication paradigm. The VR app 106 may implement its own logic to deal with incoming VR gestures.

This way, the user can achieve complex navigation or other gestures in the VR world using simpler hand/body gestures on individual user devices 200; 300 operating as controllers. Two particular embodiments will now be described.

Embodiment 1 - Using two wrist worn devices to experience a sports event in VR-mode Consider that a sports event is captured in 360 degree footage using the Nokia Ozo camera. The feed from the Ozo camera is broadcasted/published for end-users to experience the event. Ideally, the users should be able to watch the feed on their VR device, zoom-in and zoom-out at relevant points to view the event in greater detail (for example, zoom-in when a goal is scored). A zoom is a complex gesture to perform with a VR headset for two reasons: a) there is no intuitive way to simulate zoom with head movements; and b) the users also need to control the amount/resolution of zoom on a scene, which adds to its complexity.

In this embodiment, the user has a smartwatch on their left hand, and a Nike Fuelband on their right hand. Both devices are equipped with inertial sensors such as an accelerometer and a gyroscope. As such, both can measure device acceleration in 3-dimensions and in turn can recognize simple gestures such as 'right motion', `left motion', 'upwards motion', 'downward motion', etc.

In the gesture definition database 105, a zoom-in gesture is defined as:
[{Device Type: Right Hand Accelerometer, Gesture: right motion} and {Device Type: Left Hand Accelerometer, Gesture: left motion}] - i.e. both hands move away from the body.

Conversely, a zoom-out gesture is defined as:
[{Device Type: Right Hand Accelerometer, Gesture: left motion} and {Device Type: Left Hand Accelerometer, Gesture: right motion}] - i.e. both hands move towards the body.

The embodiment operates as follows.

The VR gesture layer 101 on the VR device 100 broadcasts a wireless (e.g. WiFi, BLE) probe to look for any devices which are capable of being a 'controller'.

Both the smartwatch and wrist band are available, and they send a confirmation message as follows:
[device id: watch1, available: yes, gestures: {'right motion', left motion', 'upwards motion', `downward motion'}, type: left hand accelerometer]
[device id: band1, available: yes, gestures: {'right motion', left motion', upwards motion', `downward motion'}, type: right hand accelerometer]

In order to detect their relative location/orientation (i.e. left hand or right hand) - user input can be asked for or existing techniques used to locate these devices.

When the user launches the VR app 106 to experience the sports event, the VR app 106 registers with the VR gesture layer 101 for events. VR gesture layer 101 in turn sends a message to both devices to send their individual gesture outputs.

When a valid gesture is detected on the devices (i.e. left, right, up, down motion), that gesture is it communicated to the VR gesture layer 101 as follows:
M1: {device: watch1, gesture: left motion, magnitude: 10cm, timestamp: x}
M2: {device: band1, gesture: right motion, magnitude: 10cm, timestamp: y}.

The gesture aggregator 103 on the VR device 100 runs every `m' milliseconds, parses all unprocessed gesture outputs from the controllers and looks in the gesture definition database 105 to see if they correspond to a valid VR gesture.

In this case, both M1 and M2 together make the zoom-in VR gesture - as such, the gesture aggregator 103 outputs the zoom-in gesture. Further, based on the magnitude of both the gestures M1 and M2, the gesture aggregator 103 assigns a resolution to the zoom-in gesture. For example, a 5cm of motion gesture can be set to correspond to 2x zoom and a 10cm motion can be set to mean the user intends to do a 4X zoom into the scene.

Finally, the gesture along with its resolution is published to the VR app 106 for interaction with the content.

### Embodiment 2: In-place stepping and tilt gestures to navigate a VR/AR game

In virtual or augmented reality games, players are often required to "walk' in the virtual world. For this 'walk' interaction, many VR devices provide a dedicated walk icon in the VR app. Whenever the users need to walk, they must point and hold their eye gaze towards the walk icon. This is a very non-intuitive technique which leads to poor user interaction.

In this embodiment, walking in a virtual space can be accomplished using 2 devices: one equipped with a step detector (for example a Fitbit) and other with a tilt sensor (for example a smartphone). A user wears a Fitbit on their left wrist and carries a smartphone in their right hand. The tilt angle of the smartphone indicates the direction of walking in the VR world. For the actual motion in the VR space, the user performs in-place walking (i.e. simulate step-taking by standing in the same place). The Fitbit step detector will recognize the steps and the tilt sensor in the smartphone will recognize the tilt gestures. These both then pass information to the VR gesture layer 101 wherein they will be combined to generate a VR gesture such as "Walk 1 step at 10 degrees" or "Walk 1 Step at -5 degrees".

Embodiments provide the main advantage of eliminating the need to carry any specialised hardware for interacting with VR content. Any commodity hardware with an inertial measurement unit or other sensors can act as a VR controller, and by combining the gesture outputs from these distributed controllers, complex and intuitive VR navigational or other gestures can be achieved.

A person of skill in the art would readily recognize that steps of various above-described methods can be performed by programmed computers. Herein, some embodiments are also intended to cover program storage devices, e.g., digital data storage media, which are machine or computer readable and encode machine-executable or computer-executable programs of instructions, wherein said instructions perform some or all of the steps of said above-described methods. The program storage devices maybe, e.g., digital memories, magnetic storage media such as a magnetic disks and magnetic tapes, hard drives, or optically readable digital data storage media. The embodiments are also intended to cover computers programmed to perform said steps of the above-described methods.

The functions of the various elements shown in the Figures, including any functional blocks labelled as "processors" or "logic", may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, explicit use of the term "processor" or "controller" or "logic" should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and non-volatile storage. Other hardware, conventional and/or custom, may also be included. Similarly, any switches shown in the Figures are conceptual only. Their function may be carried out through the operation of program logic, through dedicated logic, through the interaction of program control and dedicated logic, or even manually, the particular technique being selectable by the implementer as more specifically understood from the context.

It should be appreciated by those skilled in the art that any block diagrams herein represent conceptual views of illustrative circuitry embodying the principles of the invention. Similarly, it will be appreciated that any flow charts, flow diagrams, state transition diagrams, pseudo code, and the like represent various processes which may be substantially represented in computer readable medium and so executed by a computer or processor, whether or not such computer or processor is explicitly shown.

The description and drawings merely illustrate the principles of the invention. It will thus be appreciated that those skilled in the art will be able to devise various arrangements that, although not explicitly described or shown herein, embody the principles of the invention and are included within its spirit and scope. Furthermore, all examples recited herein are principally intended expressly to be only for pedagogical purposes to aid the reader in understanding the principles of the invention and the concepts contributed by the inventor(s) to furthering the art, and are to be construed as being without limitation to such specifically recited examples and conditions. Moreover, all statements herein reciting principles, aspects, and embodiments of the invention, as well as specific examples thereof, are intended to encompass equivalents thereof.

## Claims

1. A method of virtual reality interaction, comprising:
determining user interactions supported by at least one smart device;
configuring gesture logic to generate a virtual reality interaction signal in response to a corresponding activation signal generatable by said at least one smart device during a corresponding user interaction supported by said at least one smart device; and
generating said virtual reality interaction signal in response to said corresponding activation signal received from said at least one smart device during said corresponding user interaction.

2. The method of claim 1, wherein said determining comprises determining user interactions supported by a plurality of smart devices.

3. The method of claim 2, wherein said configuring comprises configuring said gesture logic to generate a virtual reality interaction signal in response to a plurality of corresponding activation signals generatable by said plurality of smart devices during a corresponding user interaction supported by each smart device.

4. The method of claim 3, wherein said generating comprises generating said virtual reality interaction signal in response to said plurality of corresponding activation signals received from said plurality of smart devices during said corresponding user interaction supported by each smart device.

5. The method of any preceding claim, wherein each activation signal comprises at least one of:
a unique identifier for that smart device;
an interaction identifier identifying said user interaction;
a magnitude of said user interaction; and
a timestamp.

6. The method of any one of claims 2 to 5, wherein said generating comprises receiving activation signals received from said plurality of smart devices, synchronising said activation signals using said timestamp and generating said virtual reality interaction signal in response to said synchronised activation signals.

7. The method of any preceding claim, wherein said determining comprises determining whether each smart device is available for user interaction.

8. The method of any preceding claim, wherein said determining comprises determining at least one of a location and orientation of each smart device.

9. The method of any preceding claim, wherein said determining comprises determining at least one of a relative location and relative orientation of each smart device with respect to each other.

10. The method of any preceding claim, wherein said determining comprises receiving from each smart device at least one of:
a unique identifier for said smart device;
an indication of a type of said smart device from which said user interactions supported by said smart device is derivable; and
a list of user interactions supported by said smart device.

11. The method of any preceding claim, wherein a user interaction supported by at least one smart device comprises step detection and a user interaction supported by at least another smart device comprises tilt detection, said configuring comprises configuring said gesture logic to generate a walk signal as said virtual reality interaction signal in response to an activation signal generatable by said at least one smart device during stepping by said user and an activation signal generatable by said at least another smart device when tilted by said user and said generating comprises generating said walk signal in response to said activation signal received from said at least one smart device during stepping by said user and said activation signal received from said at least another smart device when tilted by said user.

12. The method of any preceding claim, wherein a user interaction supported by at least one smart device and at least another smart device comprises motion detection, said configuring comprises configuring said gesture logic to generate a zoom out signal as said virtual reality interaction signal in response to activation signals generatable by said at least one smart device and at least another smart device during movement of said at least one smart device away from said at least another smart device and said generating comprises generating said zoom out signal in response to activation signals received from said at least one smart device and at least another smart device during movement of said at least one smart device away from said at least another smart device.

13. The method of any preceding claim, wherein a user interaction supported by at least one smart device and at least another smart device comprises motion detection, said configuring comprises configuring said gesture logic to generate a zoom in signal as said virtual reality interaction signal in response to activation signals generatable by said at least one smart device and at least another smart device during movement of said at least one smart device towards said at least another smart device and said generating comprises generating said zoom in signal in response to activation signals received from said at least one smart device and at least another smart device during movement of said at least one smart device towards said at least another smart device.

14. A computer program product operable, when executed on a computer, to perform the method of any preceding claim.

15. A virtual reality apparatus, comprising:
determining logic operable to determine user interactions supported by at least one smart device;
configuration logic operable to configure generating logic to generate a virtual reality interaction signal in response to a corresponding activation signal generated by said at least one smart device during a corresponding user interaction supported by said at least one smart device; and
generating logic operable to generate said virtual reality interaction signal in response to said corresponding activation signal received from said at least one smart device during said corresponding user interaction.
